(19) Europäisches Patentamt
European Patent Office
Office européen des brevets

(11) **EP 2 889 710 B1**

(12) **EUROPEAN PATENT SPECIFICATION**

(45) Date of publication and mention
of the grant of the patent:
**30.03.2016 Bulletin 2016/13**

(51) Int Cl.:
***G05B 23/02*** *(2006.01)*

(21) Application number: **14162524.4**

(22) Date of filing: **31.03.2014**

(54) **Diagnostic method and diagnostic device for hydraulic machine**

Diagnoseverfahren und Diagnosevorrichtung für hydraulische Maschine

Procédé et dispositif de diagnostic pour machine hydraulique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2013 JP 2013270821**

(43) Date of publication of application:
**01.07.2015 Bulletin 2015/27**

(73) Proprietor: **MITSUBISHI HEAVY INDUSTRIES, LTD.**
**Tokyo 108-8215 (JP)**

(72) Inventors:
• **Hayashi, Kentaro**
**Tokyo 108-8215 (JP)**
• **Ohira, Takeo**
**Tokyo 108-8215 (JP)**
• **Tsutsumi, Kazuhisa**
**Tokyo 108-8215 (JP)**

(74) Representative: **Intès, Didier Gérard André et al**
**Cabinet Beau de Loménie**
**158, rue de l'Université**
**75340 Paris Cedex 07 (FR)**

(56) References cited:
**US-A1- 2013 284 608**

**Description**

[Technical Field]

The present invention relates to a diagnostic method and a diagnostic device for a hydraulic machine.

[Background Art]

As a hydraulic machine such as a hydraulic pump and a hydraulic motor, conventionally used is a hydraulic machine which is provided with a plurality of pistons, a plurality of cylinders forming a plurality of working chambers together with the plurality of pistons, and a high pressure valve and a low pressure valve provided for each of the plurality of working chambers to change an operation state of the working chamber between an active state where there is displacement volume and a non-active state where there is no displacement volume.

In Patent Reference 1, an abnormality diagnostic device is disclosed, which diagnoses abnormality of a hydraulic pump based on an output signal from a pressure sensor detecting a discharge pressure of the hydraulic pump.

US2013/0284608 describes a method for monitoring a hydraulic machine.

[Citation List]

[Patent Reference]

[Patent Reference 1]

   JP 2012-94044 A

[Summary of Invention]

[Technical Problem]

In the case where abnormality diagnosis of the hydraulic pump is performed based on the output signal from the pressure sensor for detecting the discharge pressure of the hydraulic pump, it is possible to diagnose abnormality of the hydraulic pump as a whole. However, it is difficult to detect abnormality relating to a reciprocating motion of each of the pistons.

To detect abnormality of the hydraulic machine relating to the reciprocating motion of each of the pistons, it may be possible to adopt a method for diagnosing abnormality of the hydraulic machine by detecting a cylinder pressure of each cylinder by a pressure sensor provided in each of the cylinder. This, however, requires a plurality of pressure sensors corresponding to the number of cylinders (the number of working chambers), complicates the configuration of the hydraulic machine, and requires a considerable cost.

It is an object of at least one embodiment of the present invention to provide a diagnostic method and a diagnostic device for a hydraulic machine, whereby abnormality of the hydraulic machine can be diagnosed by a simple structure.

[Solution to Problem]

   (1) A diagnostic method according to some embodiments of the present invention is for a hydraulic machine which comprises: a plurality of pistons; a plurality of cylinders forming a plurality of working chambers together with the plurality of pistons, respectively; and a high pressure valve and a low pressure valve provided for each of the plurality of working chambers to change an operation state of the working chamber between an active state where there is displacement volume and a non-active state where there is no displacement volume, and the diagnostic method comprises:

      a vibration detection step of detecting vibration of the hydraulic machine while at least one of the high pressure valve or the low pressure valve is controlled so that $F_d$ does not coincide with N/m where $F_d$ is a ratio of the number of working chambers in the active state to the total number of the working chambers, m is the number of piston groups that are different in reciprocal motion phases of the pistons, and N is an integer not smaller than 1; and
      an abnormality diagnosis step of diagnosing abnormality of the hydraulic machine based on a detection result of the vibration obtained in the vibration detection step.

   In the diagnostic method for the hydraulic machine as described in (1), in the vibration detecting step, vibration of the hydraulic machine is detected while at least one of the high pressure valve or the low pressure valve is controlled so that $F_d$ does not coincide with N/m where $F_d$ is a ratio of the number of working chambers in the active state to the total number of the working chambers, m is the number of piston groups that are different in reciprocal motion phases of the pistons, and N is an integer not smaller than 1.

   Therefore, in the case where abnormality related to a reciprocating motion of any of the pistons occurs, it is possible to differentiate a N-time frequency which is N times as great as the frequency of vibration of the hydraulic machine resulting from the abnormality (the frequency corresponding to the cycle of the reciprocating motion of the piston) and the frequency of vibration of the hydraulic machine resulting from the normal reciprocating motion of the piston in the working chamber in the active state. As a result, the vibration of the hydraulic machine resulting from abnormality related to a reciprocating motion of the piston can be detected in distinction from the vibration of the hydraulic machine resulting from the normal reciprocating motion of the piston in the working chamber in the active state.

By diagnosing the abnormality of the hydraulic machine based on this detection result in the abnormality diagnosis step, it is possible to diagnose the abnormality related to the reciprocating motion of the piston of the hydraulic machine.

According to the diagnostic method for the hydraulic machine described in (1), unlike the above method that requires a pressure sensor for each of the cylinders to detect a cylinder pressure of each cylinder, abnormality of the hydraulic machine can be diagnosed in the manner described above as long as there is at least one sensor for detecting vibration of the hydraulic machine. Therefore, the abnormality diagnosis of the hydraulic machine can be realized by a simple structure.

(2) In some embodiments, in the diagnostic method described in (1) for the hydraulic machine,

in the vibration detection step, the vibration of the hydraulic machine is detected while controlling at least one of the high pressure valve or the low pressure valve so that the ratio $F_d$ is smaller than 1/m.

According to the diagnostic method for the hydraulic machine as described in (2), in the case where abnormality related to the reciprocating motion of any of the pistons occurs in the hydraulic machine, the frequency of vibration of the hydraulic machine resulting from the normal reciprocating motion of the piston of the working chamber in the active state is smaller than the frequency of vibration of the hydraulic machine resulting from the abnormality and thus, it is easy to diagnose abnormality of the hydraulic machine. Specifically, as a method for distinguishing and detecting vibration of the hydraulic machine resulting from the abnormality of the reciprocating motion of the piston with respect to the vibration of the hydraulic machine resulting from the normal reciprocating motion of the piston of the working chamber in the active state, visual identification by a person may be possible, besides the frequency analysis such as FFT (Fast Fourier Transform) with respect to the detected vibration of the hydraulic machine.

(3) In some embodiments, in the diagnostic method described in (1) for the hydraulic machine,

in the vibration detection step, a signal indicating the vibration of the hydraulic machine is detected while controlling at least one of the high pressure valve or the low pressure valve so that the ratio $F_d$ is greater than 1/m, and

in the abnormality diagnosis step, the abnormality of the hydraulic machine is diagnosed based on a result of frequency analysis of the signal.

In the diagnostic method for the hydraulic machine as described in (3), in the case where abnormality related to the reciprocating motion of any of the pistons occurs in the hydraulic machine, a frequency of the signal indicating vibration of the hydraulic machine resulting from the normal reciprocating motion of the piston of the working chamber in the active state becomes greater than a frequency of a signal indicating vibration of the hydraulic machine resulting from the abnormality. Even in this case, by performing the frequency analysis such as FFT with respect to the signal indicating vibration of the hydraulic machine, it is possible to distinguish and detect the vibration of the hydraulic machine resulting from the abnormality related to the reciprocating motion of the piston with respect to the vibration of the hydraulic machine resulting from the normal reciprocating motion of the piston of the hydraulic chamber in the active state.

(4) In some embodiments, in the diagnostic method described in any one of (1) to (3),

in the vibration detection step, a vibration waveform which indicates a chronological vibration level of the hydraulic machine is obtained, and

in the abnormality diagnosis step, an object vibration level corresponding to a frequency of a reciprocating motion of each of the pistons is extracted from the vibration waveform, and abnormality of the hydraulic machine is determined based on an intensity of the extracted object vibration level.

In the diagnostic method for the hydraulic machine as described in (4), in the case where abnormality related to the reciprocal motion of any of the pistons occurs, intensity of the object vibration level corresponding to the frequency of the reciprocating motion of the piston with abnormality is different from the normal in the vibration waveform detected in the vibration detection step. Thus, by determining abnormality of the hydraulic machine based on the intensity, it can be diagnosed that abnormality related to a reciprocating motion of any of the piston has occurred.

(5) In some embodiments, in the diagnostic method described in (4),

the hydraulic machine further comprise: a rotation shaft configured to rotate in association with the reciprocating motion of the pistons; and a cam provided between the rotation shaft and each of the pistons and configured so that the reciprocating motion of the pistons is associated with rotation of the rotation shaft, and

in the abnormality diagnosis step, abnormality of the hydraulic machine is determined based on the intensity of the vibration level corresponding to a frequency determined in accordance with a product of a rotation speed of the rotation shaft and the number of lobes of the cam.

In the case where abnormality related to the reciprocal motion of any of the pistons occurs in the hydraulic machine, the cam is vibrated by a force from the piston with abnormality at a frequency defined by a product of a rotation speed of the rotation shaft and the number of lobes of the cam. Therefore, by determining abnormality of the hydraulic machine based on the intensity of the object vibration level corresponding to the frequency as described in (5), it can be diagnosed that abnormality related to a reciprocating motion of any of the piston has occurred.

(6) In some embodiments, in the diagnostic method described in any one of (1) to (5),

in the abnormality diagnosis step, abnormality of at least one of the high pressure valve or the low pressure valve is diagnosed.

If the operation of the hydraulic machine is normal, the high pressure valve and the low pressure valve should open and close in correspondence with the cycle of the reciprocating motion of the piston just as the pressure in the working chamber cyclically changes. However, once abnormality occurs in the high pressure valve and the low pressure valve, the pressure in the working chamber can no longer be controlled in correspondence with the reciprocating motion of the piston, and vibration at the frequency corresponding to the cycle of the reciprocating motion of the piston (vibration resulting from abnormality related to the reciprocating motion of the piston) is generated in the hydraulic machine. Specifically, abnormality of at least one of the high pressure valve or the low pressure valve appears as vibration of the hydraulic machine resulting from the abnormality related to the reciprocating motion of the piston.

Therefore, by distinguishing and detecting the vibration of the hydraulic machine resulting from abnormality related to the reciprocating motion of the piston with respect to vibration of the hydraulic machine resulting from the normal reciprocating motion of the piston of the working chamber in the active state, it is possible to diagnose abnormality of at least one of the high pressure valve or the low pressure valve by a simple structure.

(7) In some embodiments, in the diagnostic method described in any one of (1) to (6),

the hydraulic machine is a hydraulic pump of a hydraulic transmission, the hydraulic transmission comprising: the hydraulic pump configured to be driven by mechanical energy which is input from the rotation shaft; and a hydraulic motor configured to be driven by pressure oil from the hydraulic pump.

According to the diagnostic method for the hydraulic machine as described in (7), abnormality related to the reciprocating motion of the piston of the hydraulic pump can be diagnosed based on a result of vibration detection of the hydraulic pump.

(8) In some embodiments, in the diagnostic method described in (7),

the hydraulic transmission is a power transmission part of a power generating apparatus of renewable energy type, the power generating apparatus of renewable energy type comprising: at least one blade, the rotation shaft configured to be rotated by renewable energy received by the at least one blade; and a generator configured to be driven by the rotational energy inputted via the power transmission part.

According to the diagnostic method for the hydraulic machine as described in (7), based on a result of vibration detection of the hydraulic pump used as a power transmission part of the power generating apparatus of renewable energy type, abnormality related to the reciprocating motion of the piston of the hydraulic pump can be diagnosed.

(9) A diagnostic device according to some embodiments of the present invention is for a hydraulic machine which comprises: a plurality of pistons; a plurality of cylinders forming a plurality of working chambers together with the plurality of pistons, respectively; and a high pressure valve and a low pressure valve provided for each of the plurality of working chambers to change an operation state of the working chamber between an active state where there is displacement volume and a non-active state where there is no displacement volume, and the diagnostic device comprises:

a vibration sensor configured to detect vibration of the hydraulic machine while at least one of the high pressure valve or the low pressure valve is controlled so that $F_d$ does not coincide with N/m where $F_d$ is a ratio of the number of working chambers in the active state to the total number of the working chambers, m is the number of piston groups that are different in reciprocal motion phases of the pistons, and N is an integer not smaller than 1; and

an abnormality diagnostic part configured to diagnose abnormality of the hydraulic machine based on a detection result of the vibration obtained by the vibration sensor.

In the diagnostic device described in (9) for the hydraulic machine, the vibration sensor detects vibration of the hydraulic machine while at least one of the high pressure valve or the low pressure valve is controlled so that $F_d$ does not coincide with N/m where $F_d$ is a ratio of the number of working chambers in the active state to the total number of the working chambers, m is the number of piston groups that are different in reciprocal motion phases of the pistons, and N is an integer not smaller than 1.

Therefore, in the case where abnormality related to a reciprocating motion of any of the pistons occurs, it is possible to differentiate a N-time frequency which is N times as great as the frequency of vibration of the hydraulic machine resulting from the abnormality (the frequency corresponding to the cycle of the reciprocating motion of the piston) and the frequency of vibration of the hydraulic machine resulting from the normal reciprocating motion of the piston in the working chamber in the active state. As a result, the vibration of the hydraulic machine resulting from abnormality related to a reciprocating motion of the piston can be detected in distinction from the vibration of the hydraulic machine resulting from the normal reciprocating motion of the piston in the working chamber in the active state. By diagnosing the abnormality of the hydraulic machine based on this detection result, it is possible to diagnose the abnormality related to the reciprocating motion of the piston of the hydraulic machine.

According to the diagnostic device for the hydraulic machine described in (9), unlike a diagnostic device adopting the above method that requires a pressure sensor for each of the cylinders to detect a cylinder pressure of each cylinder, abnormality of the hydraulic machine can be diagnosed in the manner described above as long as there is at least one sensor for detecting vibration of the hydraulic machine. Therefore, the abnormality diagnosis of the hydraulic machine can be realized by a simple structure.

(10) In some embodiments, in the diagnostic device described in (9), in the case where abnormality related to a reciprocating motion of any of the pistons occurs in the hydraulic machine,

the vibration sensor is configured to detect the vibration of the hydraulic machine of the hydraulic machine, in such a state that at least one of the high pressure valve or the low pressure valve is controlled so that the ratio $F_d$ is smaller than 1/m.

According to the diagnostic device for the hydraulic machine as described in (10), in the case where abnormality related to the reciprocating motion of any of the pistons occurs in the hydraulic machine, the frequency of vibration of the hydraulic machine resulting from the normal reciprocating motion of the piston of the working chamber in the active state is smaller than the frequency of vibration of the hydraulic machine resulting from the abnormality and thus, it is easy to diagnose abnormality of the hydraulic machine. Specifically, as a method for distinguishing and detecting vibration of the hydraulic machine related to the abnormality of the reciprocating motion of the piston with respect to the vibration of the hydraulic machine resulting from the normal reciprocating motion of the piston of the working chamber in the active state, visual identification by a person may be possible, besides the frequency analysis such as FFT with respect to the detected vibration of the hydraulic machine.

(11) In some embodiments, in the diagnostic device described in (9),

the vibration sensor is configured to detect a signal indicating the vibration of the hydraulic machine in such a state that at least one of the high pressure valve or the low pressure valve is controlled so that the ratio $F_d$ is greater than 1/m, and the abnormality diagnostic part is configured to diagnose abnormality of the hydraulic machine based on result of frequency analysis of the signal.

In the case where abnormality related to the reciprocating motion of any of the pistons occurs in the above hydraulic machine, a frequency of the signal indicating vibration of the hydraulic machine resulting from the normal reciprocating motion of the piston of the working chamber in the active state becomes greater than a frequency of a signal indicating vibration of the hydraulic machine resulting from the abnormality Even in this case, by performing the frequency analysis with respect to the signal indicating vibration of the hydraulic machine as described in (11), it is possible to distinguish and detect the vibration of the hydraulic machine resulting from the abnormality related to the reciprocating motion of the piston with respect to the vibration of the hydraulic machine resulting from the normal reciprocating motion of the piston of the hydraulic chamber in the active state.

(12) In some embodiments, in the diagnostic device described in any one of (9) to (11),

the vibration sensor is configured to acquire a vibration waveform which indicates a chronological vibration level of the hydraulic machine, and

the abnormality diagnostic part is configured to extract from the vibration waveform an object vibration level corresponding to a frequency of a reciprocating motion of each of the pistons and determine abnormality of the hydraulic machine based on an intensity of the extracted object vibration level.

In the diagnostic device for the hydraulic machine as described in (12), in the case where abnormality related to the reciprocal motion of any of the pistons occurs, intensity of the object vibration level corresponding to the frequency of the reciprocating motion of the piston with abnormality is different from the normal in the vibration waveform detected by the vibration sensor. Thus, by determining abnormality of the hydraulic machine based on the intensity by means of the abnormality diagnostic part, it can be diagnosed that abnormality related to a reciprocating motion of any of the piston has occurred.

(13) In some embodiments, in the diagnostic device described in (11) or (12),

the hydraulic machine further comprise: a rotation shaft configured to rotate in association with the reciprocating motion of the pistons; and a cam provided between the rotation shaft and each of the pistons and configured so that the reciprocating motion of the pistons is associated with rotation of the rotation shaft, and

the abnormality diagnostic part is configured to determine abnormality of the hydraulic machine based on the intensity of the vibration level corresponding to a frequency determined in accordance with a product of a rotation speed of the rotation shaft and the number of lobes of the cam.

In the case where abnormality related to the reciprocal motion of any of the pistons occurs in the hydraulic machine, the cam is vibrated by a force from the piston with abnormality at a frequency defined by a product of a rotation speed of the rotation shaft and the number of lobes of the cam. Therefore, by determining abnormality of the hydraulic machine based on the intensity of the object vibration level corresponding to the frequency by means of the abnormality diagnostic part as described in (13), it can be diagnosed that abnormality related to a reciprocating motion of any of the piston has occurred.

(14) In some embodiments, in the diagnostic device described in any one of (9) to (13),

the abnormality diagnostic part is configured to diagnose abnormality of at least one of the high pressure valve or the low pressure valve.

If the operation of the hydraulic machine is normal, the high pressure valve and the low pressure valve should open and close in correspondence with the cycle of the reciprocating motion of the piston just as the pressure in the working chamber cyclically changes. However, once abnormality occurs in the high pressure valve and the low pressure valve, the pressure in the working chamber can no longer be controlled in correspondence with the reciprocating motion of the piston, and vibration at the frequency corresponding to the cycle of the reciprocating motion of the piston (vibration resulting from abnormality related to the reciprocating motion of the piston) is generated in the hydraulic machine. Specifically, abnormality of at least one of the high pressure valve or the low pressure valve appears as vibration of the hydraulic machine resulting from the abnormality related to the reciprocating motion of the piston.

Therefore, by distinguishing and detecting the vibration of the hydraulic machine resulting from abnormality related to the reciprocating motion of the piston with respect to vibration of the hydraulic machine resulting from the normal reciprocating motion of the piston of the working chamber in the active state, it is possible to diagnose abnormality of at least one of the high pressure valve or the low pressure valve by a simple structure.

(15) In some embodiments, in the diagnostic device described in any one of (9) to (14),

the hydraulic machine is a hydraulic pump of a hydraulic transmission, the hydraulic transmission comprising: the hydraulic pump configured to be driven by mechanical energy which is input from the rotation shaft; and a hydraulic motor configured to be driven by pressure oil from the hydraulic pump.

According to the diagnostic device for the hydraulic machine as described in (15), abnormality related to the reciprocating motion of the piston of the hydraulic pump can be diagnosed based on a result of vibration detection of the hydraulic pump.

(16) In some embodiments, in the diagnostic device described in (15),

the hydraulic transmission is a power transmission part of a power generating apparatus of renewable energy type, the power generating apparatus of renewable energy type comprising: at least one blade, the rotation shaft configured to be rotated by renewable energy received by the at least one blade; and a generator configured to be driven by the rotational energy inputted via the power transmission part.

According to the diagnostic device for the hydraulic machine as described in (16), based on a result of vibration detection of the hydraulic pump used as a power transmission part of the power generating apparatus of renewable energy type, abnormality related to the reciprocating motion of the piston of the hydraulic pump can be diagnosed by the abnormality diagnostic part.

[Advantageous Effects of Invention]

According to at least one embodiment of the present invention, it is possible to provide a diagnostic method and a diagnostic device for a hydraulic machine, whereby abnormality of the hydraulic machine can be diagnosed by a simple structure.

[Brief Description of Drawings]

[FIG.1] FIG.1 is an illustration of a configuration of a wind turbine generator according to some embodiments.

[FIG.2] FIG.2 is an illustration of a particular configuration of a hydraulic pump in the wind turbine generator according to some embodiments.

[FIG.3] FIG.3 is an explanatory view of explaining "the number of piston groups that are different in reciprocating motion phases".

[FIG.4] FIG.4 is an explanatory view of a diagnostic device of the hydraulic pump according to some embodiments.

[FIG.5] FIG.5 is an illustration of an abnormality diagnostic flow performed by the diagnostic device of the hydraulic pump according to some embodiments.

[FIG.6A] FIG.6A is a result of a frequency analysis by FFT with respect to a vibration waveform obtained by a vibration sensor, illustrating a chronological vibration level of the hydraulic pump corresponding to a frequency in the case where there is no abnormality related to the reciprocating motion of the piston.

[FIG.6B] FIG.6B is a result of a frequency analysis by FFT with respect to a vibration waveform obtained by a vibration sensor, illustrating a chronological vibration level of the hydraulic pump corresponding to a frequency in the case where there is abnormality related to the reciprocating motion of the piston (abnormality of the high pressure valve).

[Description of Embodiments]

Preferred embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

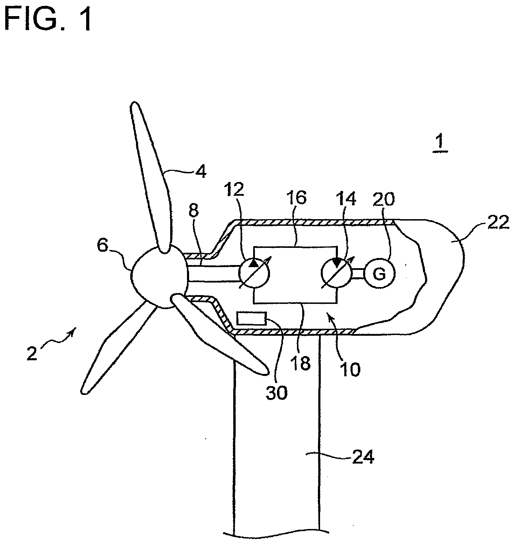

FIG.1 is an illustration of a configuration of a wind turbine generator 1.

As shown in FIG.1, the wind turbine generator 1 is equipped with a rotor 2 rotated by receiving wind, a hydraulic transmission 10 (power transfer part) for increasing rotation of the rotor 2, a generator 20 for generating electric power, a nacelle 22, a tower 24 for supporting the nacelle 22, and a control unit 30 for controlling each part of the wind turbine generator 1.

The rotor 2 is configured such that a rotation shaft 8 is connected to a hub 6 to which at least one blade 4 is mounted. In the embodiment illustrated in FIG.1, three blades 4 extend radially from the hub 6. Each of the blades 4 is mounted to the hub 6 which is connected to the rotation shaft 8. The entire rotor 2 is rotated by a power of the wind received by the blades 4, and the rotational energy is input to the hydraulic transmission 10 via the rotation shaft 8.

The hydraulic transmission 10 includes a hydraulic pump 12 of variable displacement type configured to be driven by mechanical energy input to the rotation shaft 8, a hydraulic motor 14 of variable displacement type connected to the generator 20, a high pressure line 16 (a high pressure oil channel) and a low pressure line 18 (a low pressure oil channel) which are provided between the hydraulic pump 12 and the hydraulic motor 14.

A discharge side of the hydraulic pump 12 is connected to an intake side of the hydraulic motor 14 by the high pressure line 16. An intake side of the hydraulic pump 12 is connected to a discharge side of the hydraulic motor 14 by the low pressure line 18. Operating oil (high pressure oil) discharged from the hydraulic pump 12 enters the hydraulic motor 14 via the high pressure line 16 to drive the hydraulic motor 14. The operating oil (low pressure oil) having performed work in the hydraulic motor 14 then enters the hydraulic pump 12 via the low pressure line 18 to be pressurized by the hydraulic pump 12, and then reenters the hydraulic motor 14 via the high pressure line 16.

Further, FIG.1 illustrates the hydraulic transmission 10 including only one hydraulic motor 14. This is, however, not restrictive, and a plurality of hydraulic motors 14 may be provided and be individually connected to the hydraulic motor 14. In this case, the high pressure line 16 whose one end is connected to the discharge side of the hydraulic pump 12 diverges in the middle to be connected to each of the hydraulic motors 14, and a plurality of low pressure lines 18 whose ends are respectively connected to the plurality of low hydraulic motors 14 join into one and the joined end is connected to the intake side of the hydraulic pump 12.

The generator 20 is configured to be driven by the hydraulic motor 14 and is connected to a grid (not shown) so as to supply electric power to the grid.

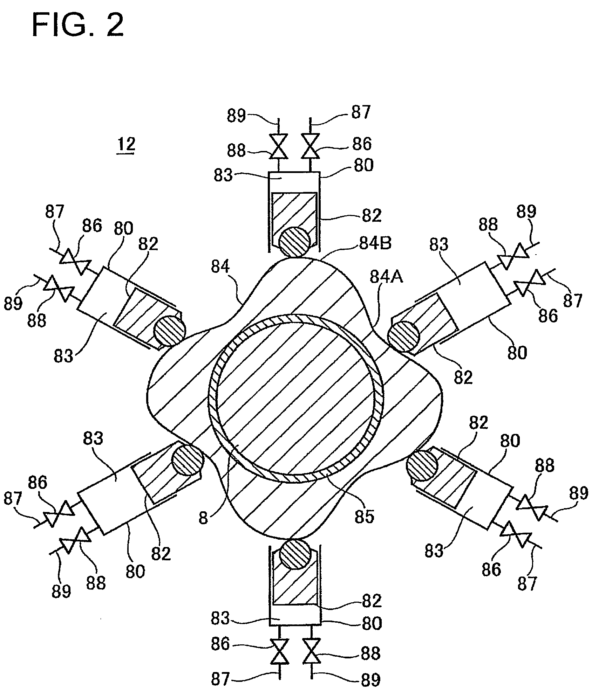

FIG.2 is an illustration of a particular configuration of the hydraulic pump 12 in the wind turbine generator 1.

As illustrated in FIG.2, the hydraulic pump 12 is provided with a plurality of pistons 82, a plurality of cylinders 80 which form a plurality of working chambers 83 (hydraulic chambers) with the plurality of pistons 82, the pistons 82 are disposed within the cylinders 80 so that the pistons 82 can perform a reciprocating motion in their respective cylinders 80, a cam 84 which has a cam profile engaging with the plurality of pistons 82, and a high pressure valve 86 and a low pressure valve 88 provided for each of the working chambers 83.

The cam 84 is attached to an outer peripheral surface of the rotation shaft 8 via a cam mount 85. The cam 84 is provided between the rotation shaft 8 and each of the pistons 82 and is configured so that the reciprocating motion of the pistons 82 is associated with rotation of the rotation shaft 8. The cam 82 is configured to reciprocate each of the pistons 82 of the hydraulic pump 12 many times while the rotation shaft 8 makes one rotation, so as to increase the torque of the hydraulic pump 12. From this perspective of increasing the torque of the hydraulic pump 12, the cam 84 is constituted by a ring cam with a wave-like cam profile in which concave portions 84A and convex portions 84B (cam ridge) are alternately disposed around the rotation shaft 8.

The high pressure valve 86 and the low pressure valve 88 are provided for each of the working chambers 82. The high pressure valve 86 and the low pressure valve 88 are provided to change a state of the working chamber 83 between an active state where there is displacement volume and a non-active state where there is no displacement volume. The high pressure valve 86 is provided in a high pressure communication path 87 between each of the working chamber 83 and the high pressure line 16 (see FIG.1). In some embodiments, the high pressure valve 86 is constituted by a check valve which permits only the flow of operating oil flowing toward the high pressure line 16 from the working chamber 83. The low pressure valve 88 is provided in the low pressure communication path 89 between each of the working chambers 83 and the low pressure line 18 (see FIG.1) and in some embodiments, is constituted by an electromagnetic poppet valve of a normal open type.

With the hydraulic pump 12, when the cam 84 rotates with the rotation shaft 8, the piston 82 reciprocates cyclically to repeat a pump stroke where the piston 82 moves from a bottom dead center to a top dead center and an intake stroke where the piston 82 moves from the top dead center to the bottom dead center.

The control unit 32 (see FIG.1) changes a ratio $F_d$ of the number of working chambers 83 in the active state to the total number of the working chambers 83 while the piston 82 moves from the bottom dead center to the top dead center and then returns to the bottom dead center, so as to obtain a desired displacement Dp of the hydraulic pump 12. Specifically, the control unit 30 determines the number of working chambers 38 in the active state using the following formula and controls the hydraulic pump 12 based on the determined number.

## (Formula 1)

$$Displacement \ D_p = N \times V_p \times F_d$$

(In the formula, N is the number of lobes of the cam 84 (the number of the cam ridges 84), and $V_p$ is the total displacement of the entire cylinders 80.)

"The working chamber in the non-active state where there is no displacement volume" is the working chamber 83 that does not discharge the operating oil to the high pressure line 16 in the pump stroke where the piston 82 moves from the bottom dead center to the top dead center. The piston 82 can for instance be retracted in its cylinder 80, so that it is not in contact with the cam 84, and therefore the rotation of the cam 84 does not cause reciprocating movement of the piston 82, which causes the operating oil to return to the low pressure line 18. In contrast, "the working chamber in the active state where there is displacement volume" is the working chamber 83 that discharges the operating oil to the high pressure line 16 (see FIG.1) in the pump stroke where the piston 82 moves from the bottom dead center to the top dead center. This state corresponds for instance to the state illustrated in figure 2, where the pistons 82 are in contact with the cam 84; therefore the rotation of the cam 84 causes reciprocating movement of the pistons 82, and a variation of the volume of the respective working chambers 83, which causes the operating oil to be discharged into the high pressure line 16.

The state of each working chamber 83 (non-active state or active state) can be selected for each reciprocation of the piston 82. Thus, by changing the ratio $F_d$ of the number of working chambers 83 in the active state to the total number of the working chambers 83, it is possible to promptly change the displacement of the hydraulic pump 12.

In the case where the abnormality related to the reciprocating motion of the piston 82 occurs in the hydraulic pump 12, vibration of the frequency corresponding to the cycle of reciprocating motion of the piston 82 may occur in the hydraulic pump 12.

For instance, in the case where abnormality occurs in the high pressure valve 86 and the high pressure valve 86 stays open, the working chamber 83 corresponding to the high pressure valve 86 with abnormality is always exposed to the high pressure oil supplied from the high pressure line 16 regardless of the phase of the reciprocating motion of the piston 82. In such case, when the cam ridge 84b is pushing the piston 82 up toward the top dead center, a large load is applied to the cam 84 from the piston 82 and thus, vibration of the frequency $F_{pump}$ corresponding to the cycle of the reciprocating motion of the piston 82 is generated in the cam 84.

The frequency $F_{pump}$ of vibration generated by the above abnormality related to the reciprocating motion of the pistons 82 can be expressed with the following formula.

## (Formula 2)

$$F_{pump} = A \times W / 60$$

(In the formula, A is the number of ridges of the cam 84 (the number of the concave portions 84A, 4 ridges in FIG.2), and W is the rotation number of the rotation shaft 8 (i.e. the rotation speed (rpm))).

If this vibration detectable, abnormality in the hydraulic pump 12 related to the reciprocating motion of the piston 82 can be diagnosed based on the detection result.

During operation of the hydraulic pump 12, besides the vibration caused by abnormality related to the reciprocating motion of the piston 82, vibration is also caused by a normal reciprocating motion of the piston 82 of the working chamber 83 in the active state.

Here, the frequency $F_{enable}$ of vibration of the hydraulic pump 12 resulting from the normal reciprocating motion of the piston 82 of the working chamber 83 in the active state can be expressed with the following formula.

## (Formula 3)

$$F_{enable} = F_d \times m \times A \times W / 60$$

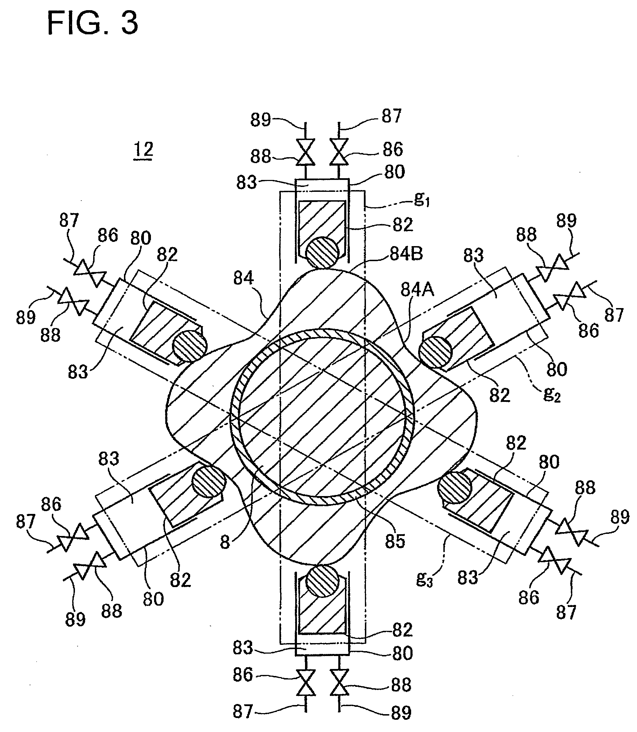

(In the formula, m is the number of piston groups that are different in reciprocal motion phases of the pistons 82. With the hydraulic pump 12 shown in FIG.2, two pistons 82 facing each other across the cam 84 reciprocates in the same phase to equalize the force applied to the cam 42 from the piston 82. Therefore, there are three piston groups, g1, g2, g3 for the pistons 82 (see FIG.3). Moreover, m is equal to the value obtained by dividing the total number of the pistons 82 by the greatest common divisor of the total number of the pistons 82 and the number of the cam ridges (by the number of pistons 82 reciprocating in the same phase)).

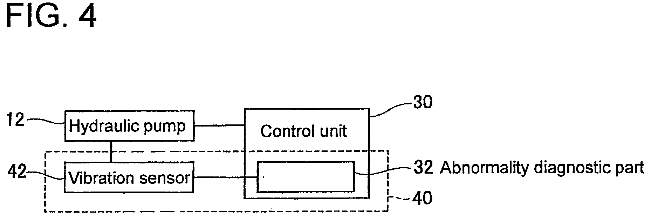

Therefore, in order to diagnose abnormality of the hydraulic pump 12 related to the reciprocating motion of the piston 82, it is necessary to make the condition where the above-mentioned frequency $F_{pump}$ can be extracted in distinction from the frequency Fenable. In view of this, a diagnostic equipment 40 (see FIG.4) of the hydraulic pump 12 according to some embodiments is provided with a vibration sensor 42 and an abnormality diagnostic part 32 constitutes a part of the control unit 30. The vibration sensor 42 and the abnormality diagnostic part 32 are described below.

The vibration sensor 42 is configured to detect vibration of the hydraulic pump 12 in the state where at least one of the high pressure valve 86 or the low pressure valve 88 (see FIG.2) is controlled by the control unit 30 so as to satisfy $N \times F_{pump} \neq F_{enable}$ where N is an integer not smaller than 1. In other words, the vibration sensor 42 is configured to detect vibration of the hydraulic pump 12 in the state where at least one of the high pressure valve 86 or the low pressure valve 88 is controlled by the control unit 30 so as that the ratio $F_d$ does not coincide with N/m.

As a result, in the case where abnormality related to the reciprocating motion of the piston 82 occurs, it is possible to differentiate a N-time frequency which is N times as great as the frequency $F_{pump}$ of vibration of the hydraulic pump 12 resulting from the abnormality (the frequency corresponding to the cycle of the reciprocating motion of the piston 82) and the frequency $F_{enable}$ of vibration of the hydraulic pump 12 resulting from the normal reciprocating motion of the piston 82 of the working chamber 83 in the active state. Therefore, the vibration of the hydraulic pump 12 resulting from abnormality related to a reciprocating motion of the piston 82 can be detected in distinction from the vibration of the hydraulic pump 12 resulting from the normal reciprocating motion of the piston 82 of the working chamber 83 in the active state. Based on this detection result, the abnormality diagnostic part 32 diagnoses the abnormality of the hydraulic pump 12 so as to diagnose the abnormality related to the reciprocating motion of the piston 82 of the hydraulic pump 12.

Moreover, with the diagnostic device 40 of the hydraulic pump 12, unlike the above method that requires a pressure sensor for each of the cylinders to detect a cylinder pressure of each cylinder for diagnosis of the hydraulic pump, abnormality of the hydraulic pump 12 can be diagnosed in the manner described above as long as there is at least one vibration sensor 42 for detecting vibration of the hydraulic pump 12. Therefore, the abnormality diagnosis of the hydraulic pump 12 can be realized by a simple structure.

In some embodiments, the vibration sensor 42 illustrated in FIG.4 is configured to detect vibration of the hydraulic pump 12 in the state where at least one of the high pressure valve 86 or the low pressure valve 88 (see FIG.2) is controlled by the control unit 30 so that the ratio $F_d$ is smaller than 1/m.

In the case where abnormality related to the reciprocating motion of any of the pistons 82 occurs in the hydraulic pump 12 in the state where at least one of the high pressure valve 86 or the low pressure valve 88 is controlled so that the ratio $F_d$ is smaller than 1/m, the frequency of the vibration of the hydraulic pump 12 resulting from the normal reciprocating motion of the piston 82 of the working chamber 83 in the active state is smaller than the frequency of the vibration of the hydraulic pump 12 resulting from the abnormality (i.e. $F_{pump} > F_{enable}$). As a result, the abnormality diagnosis of the hydraulic pump 12 is facilitated. Specifically, as a method for distinguishing and detecting vibration of the hydraulic pump 12 resulting from the abnormality of the reciprocating motion of the piston 82 with respect to the vibration of the hydraulic pump 12 resulting from the normal reciprocating motion of the piston 82 of the working chamber in the active state, visual identification by a person may be possible, in addition to the frequency analysis such as FFT (Fast Fourier Transform) with respect to the detected vibration of the hydraulic pump 12.

In some embodiments, the vibration sensor 42 illustrated in FIG.4 is configured to detect a signal indicating vibration of the hydraulic pump 12 in the state where at least one of the high pressure valve 86 or the low pressure valve 88 is controlled by the control unit 30 so that the ratio $F_d$ is greater than 1/m. In this case, the abnormality diagnostic part 32 is configured to diagnose abnormality of the hydraulic pump 12 based on the result of the frequency analysis of the signal by FFT or the like.

In the case where abnormality related to the reciprocating motion of any of the pistons 82 occurs in the hydraulic pump 12 in the state where at least one of the high pressure valve 86 or the low pressure valve 88 is controlled so that the ratio $F_d$ is greater than 1/m, a frequency of the signal indicating vibration of the hydraulic pump 12 resulting from the normal reciprocating motion of the piston 82 of the working chamber 83 in the active state becomes greater than a frequency of a signal indicating the vibration of the hydraulic pump 12 resulting from the abnormality (i.e. $F_{pump} < F_{enable}$). Even in this case, by performing the frequency analysis such as FFT with respect to the signal indicating vibration of the hydraulic pump 12, it is possible to distinguish and detect the vibration of the hydraulic pump 12 resulting from the abnormality related to the reciprocating motion of the piston 82 with respect to the vibration of the hydraulic pump 12 resulting from the normal reciprocating motion of the piston 82 of the hydraulic chamber 83 in the active state.

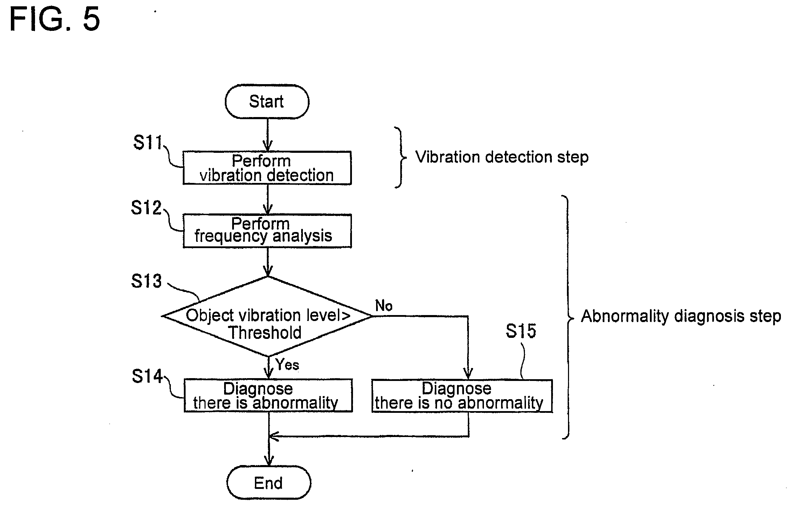

FIG.5 is an illustration of an abnormality diagnostic flow performed by the diagnostic device 40 of the hydraulic pump 12 according to some embodiments. In S11, the vibration sensor 42 acquires a vibration waveform indicating a chronological vibration level of the hydraulic pump 12 in the state where at least one of the high pressure valve 86 or the low pressure valve 88 is controlled by the control unit so that the ratio $F_d$ of the number of working chambers 83 in the active state to the total number does not coincide with N/m. In S12, the abnormality diagnostic part 32 extracts an object vibration level corresponding to the frequency $F_{pump}$ of the reciprocating motion of each of the pistons 82 from the vibration waveform. For example, by performing a frequency analysis such as FFT with respect to the vibration waveform, the object vibration level corresponding to the frequency Fpump is extracted from the vibration waveform. In S13, the abnormality diagnostic part 32 judges whether or not intensity of the object vibration level is over a threshold. If it is determined in S13 that the intensity of this object vibration level is over the threshold, the abnormality diagnostic part 32 diagnoses that there is abnormality in the hydraulic pump 12 in S14. If it is determined in S13 that the intensity of this object vibration level is not over the threshold, the abnormality diagnostic part 32 diagnoses that there is no abnormality in the hydraulic pump 12 in S15.

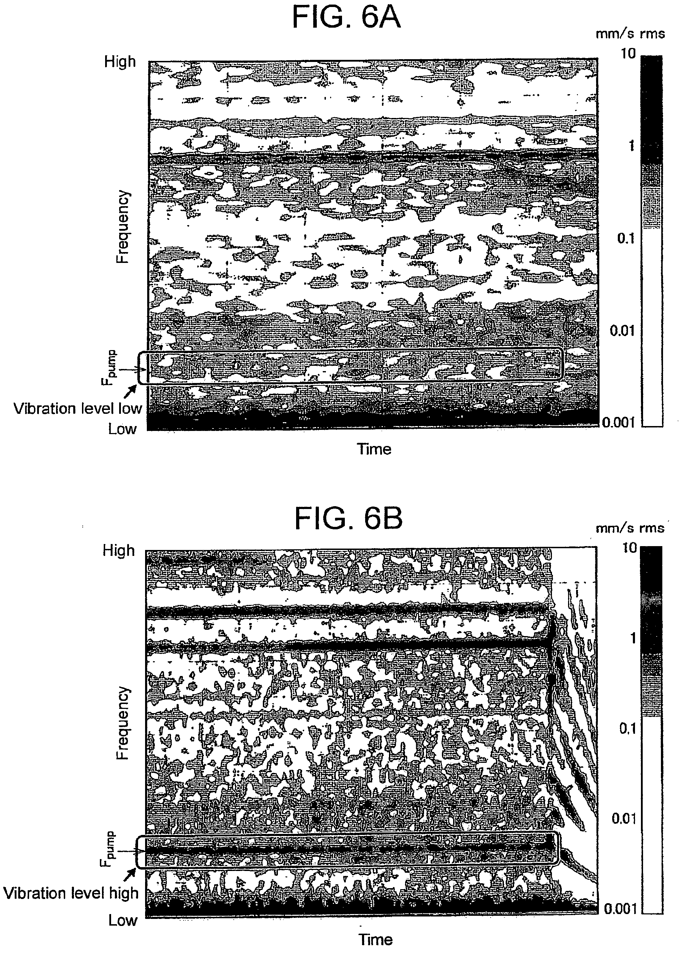

FIG.6A is a result of the frequency analysis by FFT with respect to the vibration waveform obtained in the step S12, illustrating a chronological vibration level of the hydraulic pump 12 corresponding to a frequency in the case where there is no abnormality related to the reciprocating motion of the piston 82. FIG.6B is a result of a frequency analysis by FFT with respect to a vibration waveform obtained in the step S12, illustrating a chronological vibration level of the hydraulic pump corresponding to a frequency in the case where there is abnormality related to the reciprocating motion of the piston 82 (abnormality of the high pressure valve 86 in this case). By comparing FIG.6A and FIG.6B, it is found that the object vibration level corresponding to the frequency $F_{pump}$ is intensified in the analysis result shown in FIG.6B. In the above steps S13 to S15, the abnormality of the hydraulic pump 12 is determined based on the intensity of the object vibration level corresponding to this frequency $F_{pump}$.

With the above diagnostic device 40 and diagnostic method for the hydraulic pump 12, it is possible to diagnose abnormality of the hydraulic pump 12 as mentioned above if there is at least one vibration sensor 42 for detecting vibration of the hydraulic pump 12. Thus, the abnormality diagnosis of the hydraulic pump 12 can be realized by a simple structure.

In the above embodiments, the mode where abnormality of the hydraulic pump 12 is diagnosed by the diagnostic device 40 is described. However, objects to be diagnosed by the diagnostic device 40 is not particularly limited to the hydraulic pump 12, and the hydraulic motor 14 may be a diagnostic object. In such case, the configuration of the diagnostic device for the hydraulic motor 14 is basically the same as the diagnostic device 40 for the hydraulic pump 12, and abnormality related to a reciprocating motion of any of pistons belonging to the hydraulic motor 14 can be diagnosed by a simple structure.

[Reference Signs list]

| 1 | Wind turbine generator |
| 2 | Rotor |
| 4 | Blade |
| 6 | Hub |
| 8 | Rotation shaft |
| 10 | Hydraulic transmission |
| 12 | Hydraulic pump |
| 14 | Hydraulic motor |
| 16 | High pressure line |
| 18 | Low pressure line |
| 20 | Generator |
| 22 | Nacelle |
| 24 | Tower |
| 30 | Control unit |
| 32 | Abnormality diagnostic part |
| 40 | Diagnostic device |
| 42 | Vibration sensor |
| 80 | Cylinder |
| 82 | Piston |
| 83 | Working chamber |
| 84 | Cam |
| 84A | Concave portion |
| 84B | Convex portion (cam ridge) |
| 85 | Cam mount |
| 86 | High pressure valve |
| 87 | High pressure communication path |
| 88 | Low pressure valve |
| 89 | Low pressure communication path |

**Claims**

1. A diagnostic method for a hydraulic machine (12, 14) which comprises: a plurality of pistons (82); a plurality of cylinders (80) forming a plurality of working chambers (83) together with the plurality of pistons (82), respectively; and a high pressure valve (86) and a low pressure valve (88) provided for each of the plurality of working chambers (83) to change an operation state of the working chamber (83) between an active state where there is displacement volume and a non-active state where there is no displacement volume, the method being **characterized in that** it comprises:

    a vibration detection step of detecting vibration of the hydraulic machine (12, 14) while at least one of the high pressure valve (86) or the low pressure valve (88) is controlled so that $F_d$ does not coincide with N/m where $F_d$ is a ratio of the number of working chambers (83) in the active state to the total number of the working chambers (83), m is the number of piston groups that are different in reciprocal motion phases of the pistons (82), and N is an integer not smaller than 1; and
    an abnormality diagnosis step of diagnosing abnormality of the hydraulic machine (12, 14) based on a detection result of the vibration obtained in the vibration detection step.

2. The diagnostic method for the hydraulic machine (12, 14) according to claim 1,
wherein, in the vibration detection step, the vibration of the hydraulic machine (12, 14) is detected while controlling at least one of the high pressure valve (86) or the low pressure valve (88) so that the ratio $F_d$ is smaller than 1/m.

3. The diagnostic method for the hydraulic machine (12, 14) according to claim 1,
wherein, in the vibration detection step, a signal indicating the vibration of the hydraulic machine (12, 14) is detected while controlling at least one of the high pressure valve (86) or the low pressure valve (88) so that the ratio $F_d$ is greater than 1/m, and
wherein, in the abnormality diagnosis step, the abnormality of the hydraulic machine (12, 14) is diagnosed based on a result of frequency analysis of the signal.

4. The diagnostic method for the hydraulic machine (12, 14) according to any one of claims 1 to 3,
wherein, in the vibration detection step, a vibration waveform which indicates a chronological vibration level of the hydraulic machine (12, 14) is obtained, and
wherein, in the abnormality diagnosis step, an object vibration level corresponding to a frequency of a reciprocating motion of each of the pistons (82) is extracted from the vibration waveform, and abnormality of the hydraulic machine (12, 14) is determined based on an intensity of the extracted object vibration level.

5. The diagnostic method for the hydraulic machine (12, 14) according to claim 4,
wherein the hydraulic machine further comprise: a rotation shaft (8) configured to rotate in association with the reciprocating motion of the pistons (82); and a cam (84) provided between the rotation shaft (8) and each of the pistons (82) and configured so that the reciprocating motion of the pistons (82) is associated with rotation of the rotation shaft (8), and
wherein, in the abnormality diagnosis step, abnormality of the hydraulic machine (12, 14) is determined based on the intensity of the vibration level corresponding to a frequency determined in accordance with a product of a rotation speed of the rotation shaft (8) and the number of lobes of the cam (84).

6. The diagnostic method for the hydraulic machine (12, 14) according to any one of claims 1 to 5,
wherein, in the abnormality diagnosis step, abnormality of at least one of the high pressure valve (86) or the low pressure valve (88) is diagnosed.

7. The diagnostic method for the hydraulic machine (12, 14) according to any one of claims 1 to 6,
wherein the hydraulic machine is a hydraulic pump (12) of a hydraulic transmission (10), the hydraulic transmission (10) comprising: the hydraulic pump (12) configured to be driven by mechanical energy which is input from the rotation shaft (8); and a hydraulic motor (14) configured to be driven by pressure oil from the hydraulic pump (12).

8. The diagnostic method for the hydraulic machine (12) according to claim 7,
wherein the hydraulic transmission (10) is a power transmission part of a power generating apparatus of renewable energy type, the power generating apparatus of renewable energy type comprising: at least one blade (4), the rotation shaft (8) configured to be rotated by renewable energy received by the at least one blade (4); and a generator (20) configured to be driven by the rotational energy inputted via the power transmission part.

9. A diagnostic device (40) for a hydraulic machine (12, 14) which comprises: a plurality of pistons (82); a plurality of cylinders (80) forming a plurality of working chambers (83) together with the plurality of pistons (82), respectively; and a high pressure valve (86) and a low pressure valve (88) provided for each of the plurality of working chambers (83) to change an operation state of the working chamber (83) between an active state where there is displacement volume and a non-active state where there is no displacement volume, the device (40) being **characterized in that** it comprises:

a vibration sensor (42) configured to detect vibration of the hydraulic machine (12, 14) while at least one of the high pressure valve (86) or the low pressure valve (88) is controlled so that $F_d$ does not coincide with N/m where $F_d$ is a ratio of the number of working chambers (83) in the active state to the total number of the working chambers (83), m is the number of piston groups that are different in reciprocal motion phases of the pistons (82), and N is an integer not smaller than 1; and
an abnormality diagnostic part (32) configured to diagnose abnormality of the hydraulic machine (12, 14) based on a detection result of the vibration obtained by the vibration sensor (42).

10. The diagnostic device (40) for the hydraulic machine (12, 14) according to claim 9,
wherein the vibration sensor (42) is configured to detect the vibration of the hydraulic machine, in such a state that at least one of the high pressure valve (86) or the low pressure valve (88) is controlled so that the ratio $F_d$ is smaller than 1/m.

11. The diagnostic device (40) for the hydraulic machine (12, 14) according to claim 9,

wherein the vibration sensor (42) is configured to detect a signal indicating the vibration of the hydraulic machine (12, 14) in such a state that at least one of the high pressure valve (86) or the low pressure valve (88) is controlled so that the ratio $F_d$ is greater than 1/m, and

wherein the abnormality diagnostic part (32) is configured to diagnose abnormality of the hydraulic machine (12, 14) based on result of frequency analysis of the signal.

12. The diagnostic device (40) for the hydraulic machine (12, 14) according to any one of claims 9 to 11,
wherein the vibration sensor (42) is configured to acquire a vibration waveform which indicates a chronological vibration level of the hydraulic machine (12, 14), and
wherein the abnormality diagnostic part (32) is configured to extract from the vibration waveform an object vibration level corresponding to a frequency of a reciprocating motion of each of the pistons (82) and determine abnormality of the hydraulic machine (12, 14) based on an intensity of the extracted object vibration level.

13. The diagnostic device (40) for the hydraulic machine (12, 14) according to claim 11 or 12,
wherein the hydraulic machine (12, 14) further comprise: a rotation shaft (8) configured to rotate in association with the reciprocating motion of the pistons (82); and a cam (84) provided between the rotation shaft (8) and each of the pistons (82) and configured so that the reciprocating motion of the pistons (82) is associated with rotation of the rotation shaft (8), and
wherein the abnormality diagnostic part (32) is configured to determine abnormality of the hydraulic machine (12, 14) based on the intensity of the vibration level corresponding to a frequency determined in accordance with a product of a rotation speed of the rotation shaft (8) and the number of lobes of the cam (84).

14. The diagnostic device (40) for the hydraulic machine (12, 14) according to any one of claims 9 to 13,
wherein the abnormality diagnostic part (32) is configured to diagnose abnormality of at least one of the high pressure valve (86) or the low pressure valve (88).

15. The diagnostic device (40) for the hydraulic machine (12, 14) according to any one of claims 9 to 14,
wherein the hydraulic machine is a hydraulic pump (12) of a hydraulic transmission (10), the hydraulic transmission (10) comprising: the hydraulic pump (12) configured to be driven by mechanical energy which is input from the rotation shaft (8); and a hydraulic motor (14) configured to be driven by pressure oil from the hydraulic pump (12).

16. The diagnostic device (40) for the hydraulic machine (12) according to claim 15,
wherein the hydraulic transmission (10) is a power transmission part of a power generating apparatus of renewable energy type, the power generating apparatus of renewable energy type comprising: at least one blade (4), the rotation shaft (8) configured to be rotated by renewable energy received by the at least one blade (4); and a generator (20) configured to be driven by the rotational energy inputted via the power transmission part.

**Patentansprüche**

1. Diagnoseverfahren für eine Hydraulikmaschine (12, 14), welche umfasst:

mehrere Kolben (82), mehrere Zylinder (80), die jeweils gemeinsam mit den mehreren Kolben (82) mehrere Arbeitskammern (83) bilden, und ein Hochdruckventil (86) und ein Niederdruckventil (88), die für jede der mehreren Arbeitskammern (83) vorgesehen sind, um einen Betriebszustand der Arbeitskammer (83) zwischen einem aktiven Zustand, bei dem ein Verdrängungsvolumen vorliegt, und einem nichtaktiven Zustand, bei dem kein Verdrängungsvolumen vorliegt, zu ändern, wobei das Verfahren **dadurch gekennzeichnet ist, dass** es umfasst:

einen Schwingungsdetektierschritt des Detektierens von Schwingungen der Hydraulikmaschine (12, 14), wobei mindestens eines aus der Gruppe umfassend das Hochdruckventil (86) und das Niederdruckventil (88) derart geregelt wird, dass $F_d$ nicht mit N/m übereinstimmt, wobei $F_d$ ein Verhältnis der Anzahl von Arbeitskammern (83) in dem aktiven Zustand zu der Gesamtanzahl der Arbeitskammern (83) ist, m die Anzahl von Kolbengruppen ist, die in Hin- und Herbewegungsphasen der Kolben (82) unterschiedlich sind, und N eine ganze Zahl nicht kleiner als 1 ist, und
einen Anomaliediagnoseschritt des Diagnostizierens einer Anomalie der Hydraulikmaschine (12, 14) auf der Basis eines in dem Schwingungsdetektierschritt erhaltenen Schwingungsdetektierergebnisses.

2. Diagnoseverfahren für die Hydraulikmaschine (12, 14) nach Anspruch 1,
wobei in dem Schwingungsdetektierschritt die Schwingungen der Hydraulikmaschine (12, 14) detektiert werden, während mindestens eines aus der Gruppe umfassend das Hochdruckventil (86) und das Niederdruckventil (88) derart geregelt wird, dass das Verhältnis $F_d$ kleiner als 1/m ist.

3. Diagnoseverfahren für die Hydraulikmaschine (12, 14) nach Anspruch 1,
   wobei in dem Schwingungsdetektierschritt ein Signal, welches die Schwingungen der Hydraulikmaschine (12, 14) angibt, detektiert wird, während mindestens eines aus der Gruppe umfassend das Hochdruckventil (86) und das Niederdruckventil (88) derart geregelt wird, dass das Verhältnis $F_d$ größer als 1/m ist, und
   wobei in dem Anomaliediagnoseschritt die Anomalie der Hydraulikmaschine (12, 14) auf der Basis eines Frequenzanalyseergebnisses des Signals diagnostiziert wird.

4. Diagnoseverfahren für die Hydraulikmaschine (12, 14) nach einem beliebigen der Ansprüche 1 bis 3,
   wobei in dem Schwingungsdetektierschritt eine Schwingungswellenform, welche einen chronologischen Schwingungspegel der Hydraulikmaschine (12, 14) angibt, erhalten wird, und
   wobei in dem Anomaliediagnoseschritt ein Objektschwingungspegel, der einer Frequenz einer Hin- und Herbewegung von jedem der Kolben (82) entspricht, aus der Schwingungswellenform extrahiert wird und eine Anomalie der Hydraulikmaschine (12, 14) auf der Basis einer Intensität des extrahierten Objektschwingungspegels bestimmt wird.

5. Diagnoseverfahren für die Hydraulikmaschine (12, 14) nach Anspruch 4,
   wobei die Hydraulikmaschine ferner umfasst: eine Drehwelle (8), die dazu ausgebildet ist, sich in Verbindung mit der Hin- und Herbewegung der Kolben (82) zu drehen, und einen Nocken (84), der zwischen der Drehwelle (8) und jedem der Kolben (82) vorgesehen ist und derart ausgebildet ist, dass die Hin- und Herbewegung der Kolben (82) mit der Drehung der Drehwelle (8) in Verbindung steht, und
   wobei in dem Anomaliediagnoseschritt eine Anomalie der Hydraulikmaschine (12, 14) auf der Basis der Intensität des Schwingungspegels bestimmt wird, der einer Frequenz entspricht, die entsprechend einem Produkt aus einer Drehzahl der Drehwelle (8) und der Anzahl von Lappen des Nockens (84) ermittelt wird.

6. Diagnoseverfahren für die Hydraulikmaschine (12, 14) nach einem beliebigen der Ansprüche 1 bis 5,
   wobei in dem Anomaliediagnoseschritt eine Anomalie von mindestens einem aus der Gruppe umfassend das Hochdruckventil (86) und das Niederdruckventil (88) diagnostiziert wird.

7. Diagnoseverfahren für die Hydraulikmaschine (12, 14) nach einem beliebigen der Ansprüche 1 bis 6,
   wobei die Hydraulikmaschine eine Hydraulikpumpe (12) eines Hydraulikgetriebes (10) ist, wobei das Hydraulikgetriebe (10) umfasst: die Hydraulikpumpe (12), die dazu ausgebildet ist, durch mechanische Energie angetrieben zu werden, welche von der Drehwelle (8) eingebracht wird, und einen Hydraulikmotor (14), der dazu ausgebildet ist, durch Drucköl von der Hydraulikpumpe (12) angetrieben zu werden.

8. Diagnoseverfahren für die Hydraulikmaschine (12) nach Anspruch 7,
   wobei das Hydraulikgetriebe (10) ein Energieübertragungsteil einer Vorrichtung zur Erzeugung von Energie vom erneuerbaren Typ ist, wobei die Vorrichtung zur Erzeugung von Energie vom erneuerbaren Typ umfasst: mindestens ein Rotorblatt (4), die Drehwelle (8), die dazu ausgebildet ist, durch erneuerbare Energie gedreht zu werden, welche durch das mindestens eine Rotorblatt (4) entgegengenommen wird, und einen Generator (20), der dazu ausgebildet ist, durch die Rotationsenergie, welche über den Energieübertragungsteil eingebracht wird, angetrieben zu werden.

9. Diagnosevorrichtung (40) für eine Hydraulikmaschine (12, 14), welche umfasst:

   mehrere Kolben (82), mehrere Zylinder (80), die jeweils gemeinsam mit den mehreren Kolben (82) mehrere Arbeitskammern (83) bilden, und ein Hochdruckventil (86) und ein Niederdruckventil (88), die für jede der mehreren Arbeitskammern (83) vorgesehen sind, um einen Betriebszustand der Arbeitskammer (83) zwischen einem aktiven Zustand, bei dem ein Verdrängungsvolumen vorliegt, und einem nichtaktiven Zustand, bei dem kein Verdrängungsvolumen vorliegt, zu ändern, wobei die Vorrichtung (40) **dadurch gekennzeichnet ist, dass** sie umfasst:

   einen Vibrationssensor (42), der dazu ausgebildet ist, Schwingungen der Hydraulikmaschine (12, 14) zu detektieren, während mindestens eines aus der Gruppe umfassend das Hochdruckventil (86) und das Niederdruckventil (88) derart geregelt wird, dass $F_d$ nicht mit N/m übereinstimmt, wobei $F_d$ ein Verhältnis der Anzahl von Arbeitskammern (83) in dem aktiven Zustand zu der Gesamtanzahl der Arbeitskammern (83) ist, m die Anzahl von Kolbengruppen ist, die in Hin- und Herbewegungsphasen der Kolben (82) unterschiedlich sind, und N eine ganze Zahl nicht kleiner als 1 ist, und einen Anomaliediagnoseteil (32), der dazu ausgebildet ist, Anomalie der Hydraulikmaschine (12, 14) auf der Basis eines durch den Schwingungssensor (42) erfassten Detektierergebnisses der Schwingungen zu diagnostizieren.

10. Diagnosevorrichtung (40) für die Hydraulikmaschine (12, 14) nach Anspruch 9, wobei der Schwingungssensor (42) dazu ausgebildet ist, die Schwingungen der Hydraulikmaschine in einem derartigen Zustand zu detektieren, in dem mindestens eines aus der Gruppe umfassend das Hochdruckventil (86) und das Niederdruckventil (88) derart geregelt wird, dass das Verhältnis $F_d$ kleiner als 1/m ist.

11. Diagnosevorrichtung (40) für die Hydraulikmaschine (12, 14) nach Anspruch 9, wobei der Schwingungssensor (42) dazu ausgebildet ist, ein Signal, welches die Schwingungen der Hydraulikmaschine (12, 14) angibt, in einem derartigen Zustand zu detektieren, in dem mindestens eines aus der Gruppe umfassend das Hochdruckventil (86) und das Niederdruckventil (88) derart geregelt wird, dass das Verhältnis $F_d$ größer als 1/m ist, und wobei der Anomaliediagnoseteil (32) dazu ausgebildet ist, eine Anomalie der Hydraulikmaschine (12, 14) auf der Basis eines Frequenzanalyseergebnisses des Signals zu diagnostizieren.

12. Diagnosevorrichtung (40) für die Hydraulikmaschine (12,14) nach einem beliebigen der Ansprüche 9 bis 11, wobei der Schwingungssensor (42) dazu ausgebildet ist, eine Schwingungswellenform zu erfassen, welche einen chronologischen Schwingungspegel der Hydraulikmaschine (12, 14) angibt, und wobei der Anomaliediagnoseteil (32) dazu ausgebildet ist, einen Objektschwingungspegel, der einer Frequenz einer Hin- und Herbewegung von jedem der Kolben (82) entspricht, aus der Schwingungswellenform zu extrahieren und eine Anomalie der Hydraulikmaschine (12, 14) auf der Basis einer Intensität des extrahierten Objektschwingungspegels zu bestimmen.

13. Diagnosevorrichtung (40) für die Hydraulikmaschine (12, 14) nach Anspruch 11 oder 12, wobei die Hydraulikmaschine (12, 14) ferner umfasst: eine Drehwelle (8), die dazu ausgebildet ist, sich in Verbindung mit der Hin- und Herbewegung der Kolben (82) zu drehen, und einen Nocken (84), der zwischen der Drehwelle (8) und jedem der Kolben (82) vorgesehen ist und derart ausgebildet ist, dass die Hin- und Herbewegung der Kolben (82) mit der Drehung der Drehwelle (8) in Verbindung steht, und wobei der Anomaliediagnoseteil (32) dazu ausgebildet ist, eine Anomalie der Hydraulikmaschine (12, 14) auf der Basis der Intensität des Schwingungspegels zu bestimmen, der einer Frequenz entspricht, die entsprechend einem Produkt aus einer Drehzahl der Drehwelle (8) und der Anzahl von Lappen des Nockens (84) ermittelt wird.

14. Diagnosevorrichtung (40) für die Hydraulikmaschine (12, 14) nach einem beliebigen der Ansprüche 9 bis 13, wobei der Anomaliediagnoseteil (32) dazu ausgebildet ist, eine Anomalie von mindestens einem aus der Gruppe umfassend das Hochdruckventil (86) und das Niederdruckventil (88) zu diagnostizieren.

15. Diagnosevorrichtung (40) für die Hydraulikmaschine (12, 14) nach einem beliebigen der Ansprüche 9 bis 14, wobei die Hydraulikmaschine eine Hydraulikpumpe (12) eines Hydraulikgetriebes (10) ist, wobei das Hydraulikgetriebe (10) umfasst: die Hydraulikpumpe (12), die dazu ausgebildet ist, durch mechanische Energie angetrieben zu werden, welche von der Drehwelle (8) eingebracht wird, und einen Hydraulikmotor (14), der dazu ausgebildet ist, durch Drucköl von der Hydraulikpumpe (12) angetrieben zu werden.

16. Diagnosevorrichtung (40) für die Hydraulikmaschine (12) nach Anspruch 15, wobei das Hydraulikgetriebe (10) ein Energieübertragungsteil einer Vorrichtung zur Erzeugung von Energie vom erneuerbaren Typ ist, wobei die Vorrichtung zur Erzeugung von Energie vom erneuerbaren Typ umfasst: mindestens ein Rotorblatt (4), die Drehwelle (8), die dazu ausgebildet ist, durch erneuerbare Energie gedreht zu werden, welche durch das mindestens eine Rotorblatt (4) entgegengenommen wird, und einen Generator (20), der dazu ausgebildet ist, durch die Drehenergie, welche über den Energieübertragungsteil einbracht wird, angetrieben zu werden.

**Revendications**

1. Procédé de diagnostic pour une machine hydraulique (12, 14) qui comporte : une pluralité de pistons (82) ; une pluralité de cylindres (80) formant une pluralité de chambres de travail (83) avec la pluralité de pistons (82), respectivement ; et une soupape à haute pression (86) et une soupape à basse pression (88) prévues pour chaque chambre de la pluralité de chambres de travail (83) pour changer un état de fonctionnement de la chambre de travail (83) entre un état actif où il y a une cylindrée et un état inactif à cylindrée nulle, le procédé étant **caractérisé en ce qu'**il comporte :

une étape de détection de vibration destinée à détecter une vibration de la machine hydraulique (12, 14) alors que au moins une de la soupape à haute pression (86) ou de la soupape à basse pression (88) est commandée de telle sorte que Fd ne coïncide pas avec N/m où Fd est un rapport du nombre de chambres de travail (83) dans l'état actif sur le nombre total de chambres de travail (83), m est le nombre de groupes de piston qui sont différents en phases de mouvement alternatif des pistons (82), et N est un nombre entier qui n'est pas inférieur à 1 ; et une étape de diagnostic d'anomalie destinée à diagnostiquer une anomalie de la machine hydraulique (12, 14) sur la base d'un résultat de détection de la vibration obtenue dans l'étape de détection de vibration.

2. Procédé de diagnostic pour la machine hydraulique (12, 14) selon la revendication 1, selon lequel, dans l'étape de détection de vibration, la vibration de la machine hydraulique (12, 14) est détectée tout en commandant au moins une de la soupape à haute pression (86) ou de la soupape à basse pression (88) de telle sorte que le rapport Fd est plus petit que 1/m.

3. Procédé de diagnostic pour la machine hydraulique (12, 14) selon la revendication 1, selon lequel, dans l'étape de détection de vibration, un signal indiquant la vibration de la machine hydraulique (12, 14) est détecté tout en commandant au moins une de la soupape à haute pression (86) ou de la soupape à basse pression (88) de telle sorte que le rapport Fd est plus grand que 1/m, et selon lequel, dans l'étape de diagnostic d'anomalie, l'anomalie de la machine hydraulique (12, 14) est diagnostiquée sur la base d'un résultat de l'analyse de fréquence du signal.

4. Procédé de diagnostic pour la machine hydraulique (12, 14) selon l'une quelconque des revendications 1 à 3, selon lequel, dans l'étape de détection de vibration, une forme d'onde de vibration qui indique un niveau de vibration chronologique de la machine hydraulique (12, 14) est obtenue, et selon lequel, dans l'étape de diagnostic d'anomalie, un niveau de vibration d'objet correspondant à une fréquence d'un mouvement alternatif de chacun des pistons (82) est extraite de la forme d'onde de vibration, et une anomalie de la machine hydraulique (12, 14) est déterminée sur la base d'une intensité du niveau extrait de vibration d'objet.

5. Procédé de diagnostic pour la machine hydraulique (12, 14) selon la revendication 4, selon lequel la machine hydraulique comporte en outre : un arbre de rotation (8) configuré pour tourner en association avec le mouvement alternatif des pistons (82) ; et une came (84) prévue entre l'arbre de rotation (8) et chacun des pistons (82) et configurée de telle sorte que le mouvement alternatif des pistons (82) est associé à la rotation de l'arbre de rotation (8), et selon lequel, dans l'étape de diagnostic d'anomalie, une anomalie de la machine hydraulique (12, 14) est déterminée sur la base de l'intensité du niveau de vibration correspondant à une fréquence déterminée en fonction d'un produit d'une vitesse de rotation de l'arbre de rotation (8) et du nombre de lobes de la came (84).

6. Procédé de diagnostic pour la machine hydraulique (12, 14) selon l'une quelconque des revendications 1 à 5, selon lequel, dans l'étape de diagnostic d'anomalie, une anomalie de au moins une de la soupape à haute pression (86) ou de la soupape à basse pression (88) est diagnostiquée.

7. Procédé de diagnostic pour la machine hydraulique (12, 14) selon l'une quelconque des revendications 1 à 6, selon lequel la machine hydraulique est une pompe hydraulique (12) d'une transmission hydraulique (10), la transmission hydraulique (10) comportant : la pompe hydraulique (12) configurée pour être entraînée par de l'énergie mécanique qui est entrée à partir de l'arbre de rotation (8) ; et un moteur hydraulique (14) configuré pour être entraîné par de l'huile sous pression provenant de la pompe hydraulique (12).

8. Procédé de diagnostic pour la machine hydraulique (12) selon la revendication 7, selon lequel la transmission hydraulique (10) est une partie de transmission d'énergie d'un appareil de génération d'énergie du type à énergie renouvelable, l'appareil de génération d'énergie du type à énergie renouvelable comportant : au moins une pale (4), l'arbre de rotation (8) configuré pour être entraîné en rotation par de l'énergie renouvelable reçue par la au moins une pale (4) ; et une génératrice (20) configurée pour être entraînée par l'énergie de rotation entrée par l'intermédiaire de la partie de transmission d'énergie.

9. Dispositif de diagnostic (40) pour une machine hydraulique (12, 14) qui comporte : une pluralité de pistons (82) ; une pluralité de cylindres (80) formant une pluralité de chambres de travail (83) avec la pluralité de pistons (82), respectivement ; et une soupape à haute pression (86) et une soupape à basse pression (88) prévues pour chaque chambre de la pluralité de chambres de travail (83) pour changer un état de fonctionnement de la chambre de travail (83) entre un état actif où il y a une cylindrée et un état inactif à cylindrée nulle, le dispositif (40) étant **caractérisé en ce qu'**il comporte :

un capteur de vibration (42) configuré pour détecter une vibration de la machine hydraulique (12, 14) tandis que au moins une de la soupape à haute pression (86) ou de la soupape à basse pression (88) est commandée de telle sorte que Fd ne coïncide pas avec N/m où Fd est un rapport du nombre de chambres de travail (83) dans l'état actif sur le nombre total de chambres de travail (83), m est le nombre de groupes de piston qui sont différents en phases de mouvement alternatif des pistons (82), et N est un nombre entier qui n'est pas plus petit que 1 ; et une partie de diagnostic d'anomalie (32) configurée pour diagnostiquer une anomalie de la machine hydraulique (12, 14) sur la base d'un résultat de détection de la vibration obtenu par le capteur de vibration (42).

10. Dispositif de diagnostic (40) pour la machine hydraulique (12, 14) selon la revendication 9, dans lequel le capteur de vibration (42) est configuré pour détecter la vibration de la machine hydraulique, dans un état tel que au moins une de la soupape à haute pression (86) ou de la soupape à basse pression (88) est commandée de telle sorte que le rapport Fd est plus petit que 1/m.

11. Dispositif de diagnostic (40) pour la machine hydraulique (12, 14) selon la revendication 9, dans lequel le capteur de vibration (42) est configuré pour détecter un signal indiquant la vibration de la machine hydraulique (12, 14) dans un état tel que au moins une de la soupape à haute pression (86) ou de la soupape à basse pression (88) est commandée de telle sorte que le rapport Fd est plus grand que 1/m, et dans lequel la partie de diagnostic d'anomalie (32) est configurée pour diagnostiquer une anomalie de la machine hydraulique (12, 14) sur la base du résultat de l'analyse de fréquence du signal.

12. Dispositif de diagnostic (40) pour la machine hydraulique (12, 14) selon l'une quelconque des revendications 9 à 11, dans lequel le capteur de vibration (42) est configuré pour acquérir une forme d'onde de vibration qui indique un niveau de vibration chronologique de la machine hydraulique (12, 14), et dans lequel la partie de diagnostic d'anomalie (32) est configurée pour extraire de la forme d'onde de vibration un niveau de vibration d'objet correspondant à une fréquence d'un mouvement alternatif de chacun des pistons (82) et déterminer une anomalie de la machine hydraulique (12, 14) sur la base d'une intensité du niveau extrait de vibration d'objet.

13. Dispositif de diagnostic (40) pour la machine hydraulique (12, 14) selon la revendication 11 ou 12, dans lequel la machine hydraulique (12, 14) comporte en outre : un arbre de rotation (8) configuré pour tourner en association avec le mouvement alternatif des pistons (82) ; et une came (84) prévue entre l'arbre de rotation (8) et chacun des pistons (82) et configurée de telle sorte que le mouvement alternatif des pistons (82) est associé à la rotation de l'arbre de rotation (8), et dans lequel la partie de diagnostic d'anomalie (32) est configurée pour déterminer une anomalie de la machine hydraulique (12, 14) sur la base de l'intensité du niveau de vibration correspondant à une fréquence déterminée en fonction d'un produit d'une vitesse de rotation de l'arbre de rotation (8) et du nombre de lobes de la came (84).

14. Dispositif de diagnostic (40) pour la machine hydraulique (12, 14) selon l'une quelconque des revendications 9 à 13, dans lequel la partie de diagnostic d'anomalie (32) est configurée pour diagnostiquer une anomalie de au moins une de la soupape à haute pression (86) ou de la soupape à basse pression (88).

15. Dispositif de diagnostic (40) pour la machine hydraulique (12, 14) selon l'une quelconque des revendications 9 à 14, dans lequel la machine hydraulique est une pompe hydraulique (12) d'une transmission hydraulique (10), la transmission hydraulique (10) comportant : la pompe hydraulique (12) configurée pour être entraînée par de l'énergie mécanique qui est entrée à partir de l'arbre de rotation (8) ; et un moteur hydraulique (14) configuré pour être entraîné par de l'huile sous pression provenant de la pompe hydraulique (12).

16. Dispositif de diagnostic (40) pour la machine hydraulique (12) selon la revendication 15, dans lequel la transmission hydraulique (10) est une partie de transmission d'énergie d'un appareil de génération d'énergie du type à énergie renouvelable, l'appareil de génération d'énergie du type à énergie renouvelable comportant : au moins une pale (4), l'arbre de rotation (8) configuré pour être entraîné en rotation par de l'énergie renouvelable reçue par la au moins une pale (4) ; et une génératrice (20) configurée pour être entraînée par l'énergie de rotation entrée par l'intermédiaire de la partie de transmission d'énergie.

# FIG. 1

FIG. 2

FIG. 3

# FIG. 4

12 — Hydraulic pump

30

Control unit

42 — Vibration sensor

32 Abnormality diagnostic part

40

# FIG. 5

EP 2 889 710 B1

## FIG. 6A

## FIG. 6B

**EP 2 889 710 B1**

## REFERENCES CITED IN THE DESCRIPTION

### Patent documents cited in the description

- US 20130284608 A
- JP 2012094044 A